# EUROPEAN PATENT APPLICATION

(11) **EP 4 393 639 A1**
(43) Date of publication of application: **03.07.2024**
(21) Application number: 21955169.4
(22) Date of filing: 17.11.2021
(51) Int. Cl.: B23Q 15/20, B23Q 15/013, G05B 19/4093

(54) **LATHE CONTROL APPARATUS AND METHOD**

(30) Priority: 27.08.2021 KR 20210113653
(71) Applicant: Hanwha Precision Machinery Co., Ltd., Changwon-si, Gyeongsangnam-do 51552 (KR)
(72) Inventor: SO, Chang Ju, Changwon-si Gyeongsangnam-do 51552 (KR); KIM, Min Su, Changwon-si Gyeongsangnam-do 51552 (KR); HA, Sung Min, Changwon-si Gyeongsangnam-do 51552 (KR)
(74) Representative: Gulde & Partner
(86) International application number: PCT/KR2021/016854
(87) International publication number: WO 2023/027251

(57) **Abstract**

The present disclosure relates to an apparatus and method for controlling a lathe, and more particularly, to an apparatus and method for controlling a lathe, which store machining programs and data for the creation of different workpieces in a database and extract and provide the machining programs and data to lathes based on user selection.

An apparatus for controlling a lathe according to an embodiment of the present invention comprises a receiving unit receiving machining programs and information for use in lathes for the production of workpieces; a storage unit storing the machining programs and information; a data management unit generating machining data sets for the workpieces by associating the machining programs and information; a control unit searching for, finding, and extracting machining data sets that correspond to a received search request from among a plurality of machining data sets; and a transmitting unit transmitting a search result that includes the found machining data sets.

## Description

### [TECHNICAL FIELD]

The present disclosure relates to an apparatus and method for controlling a lathe, and more particularly, to an apparatus and method for controlling a lathe, which store machining programs and data for the creation of different workpieces in a database and extract and provide the machining programs and data to lathes based on user selection.

### [BACKGROUND ART]

A lathe, equipped with multiple tools, can perform machining operations on raw materials to produce workpieces. The lathe can sequentially perform machining operations on multiple raw materials to produce several workpieces.

To produce workpieces, the lathe can utilize machining programs and data. By using a particular machining program and particular machining data, the lathe can produce a particular workpiece.

On the other hand, if the machining programs and data are not shared among multiple users managing the lathe, unnecessary creation of machining programs and data may occur when producing the same workpieces.

Therefore, there is a need for the emergence of an invention that ensures the proper sharing of machining programs and data among multiple users.

### [DISCLOSURE]

### [Technical Problems]

To address the aforementioned problems, exemplary embodiments of the present disclosure provide an apparatus and method for controlling a lathe, which store machining programs and data for the creation of different workpieces in a database, and extract and provide the machining programs and data to lathes based on user selection.

The problems of the present invention are not limited to the problems mentioned above, and other objects not mentioned will be clearly understood by those skilled in the art from the following descriptions.

In order to achieve the above object, an apparatus for controlling a lathe according to an embodiment of the present invention comprises a receiving unit receiving machining programs and information for use in lathes for the production of workpieces; a storage unit storing the machining programs and information; a data management unit generating machining data sets for the workpieces by associating the machining programs and information; a control unit searching for, finding, and extracting machining data sets that correspond to a received search request from among a plurality of machining data sets; and a transmitting unit transmitting a search result that includes the found machining data sets.

Wherein the machining data sets include program information, and the program information includes at least one of the following: machining programs for use in the production of the workpieces, program numbers of the machining programs, and program version information, which shows modification histories of the machining programs.

Wherein the machining information includes at least one of the following: design drawings of the workpieces, images of the workpieces, material information of the workpieces, the types of machining cycles for the workpieces, machining time required for the production of the workpieces, machining temperature information during the production of the workpieces, information on tools used for the production of the workpieces, offset data for the tools, and machining setting data for the tools.

Wherein the receiving unit receives the machining programs and the machining information through a network.

Wherein the transmitting unit transmits the search result through a network.

Wherein the search request is received from a user terminal searching for machining data sets.

Wherein the control unit searches for machining data sets that correspond to a search conducted by the user terminal from among the plurality of machining data sets.

Wherein the data management unit updates an artificial intelligence algorithm by learning correlations between a keyword and machining data sets found in response to the keyword, and the control unit searches for machining data sets by applying a newly-received keyword to the artificial intelligence algorithm.

Wherein if a learning level of the artificial intelligence algorithm is above a previously-set threshold learning level, the control unit searches for machining data sets by applying the newly-received keyword to the artificial intelligence algorithm.

Wherein the search result includes similarities between the search request and the found machining data sets.

A method of controlling a lathe according to an embodiment of the present invention comprises receiving machining programs and information for use in lathes for the production of workpieces; storing the machining programs and information; generating machining data sets for the workpieces by associating the machining programs and information; searching for and finding machining data sets that correspond to a received search request from among a plurality of machining data sets; and transmitting a search result that includes the found machining data sets.

Wherein the machining data sets include program information, and the program information includes at least one of the following: machining programs for use in the production of the workpieces, program numbers of the machining programs, and program version information, which shows modification histories of the machining programs.

Wherein the machining information includes at least one of the following: design drawings of the workpieces, images of the workpieces, material information of the workpieces, the types of machining cycles for the workpieces, machining time required for the production of the workpieces, machining temperature information during the production of the workpieces, information on tools used for the production of the workpieces, offset data for the tools, and machining setting data for the tools.

Wherein the receiving the machining programs and the machining information, comprises receiving the machining programs and the machining information through a network.

Wherein the transmitting the search result, comprises transmitting the search result through a network.

Wherein the search request is received from a user terminal searching for machining data sets.

Wherein the searching for and finding machining data sets, comprises searching for and finding machining data sets that correspond to a search conducted by the user terminal from among the plurality of machining data sets.

The method further comprises updating an artificial intelligence algorithm by learning correlations between a keyword and machining data sets found in response to the keyword; and searching for machining data sets by applying a newly-received keyword to the artificial intelligence algorithm.

Wherein the searching for machining data sets by applying the newly-received keyword to the artificial intelligence algorithm, comprises searching for machining data sets by applying the newly-received keyword to the artificial intelligence algorithm, if a learning level of the artificial intelligence algorithm is above a previously-set threshold learning level.

Wherein the search result includes similarities between the search request and the found machining data sets.

The specific details of other embodiments are included in the detailed description and drawings.

### [Advantageous Effects]

The apparatus and method for controlling a lathe according to the present invention store machining programs and data for the creation of different workpieces in a database, and extract and provide the machining programs and data to lathes based on user selection, thereby enabling the proper sharing of machining programs and data among multiple users.

The effects of the present invention are not limited to those mentioned above, and other effects not mentioned can be clearly understood by those skilled in the art from the claims.

### [BRIEF DESCRIPTION OF THE DRAWINGS]

FIG. 1 is a drawing illustrating a lathe control system.
FIG. 2 is a drawing illustrating a lathe.
FIG. 3 is a block diagram of a lathe control device according to an embodiment of the present invention.
FIG. 4 is a drawing illustrating a database.
FIG. 5 is a drawing illustrating a machining data set.
FIG. 6 is a drawing illustrating a search results screen.
FIG. 7 is a flowchart illustrating a method of controlling a lathe according to an embodiment of the present invention.

### [BEST MODES FOR CARRYING OUT THE INVENTION]

Hereinafter, preferred embodiments of the present invention will be described in detail with reference to the accompanying drawings. Advantages and features of the present invention, and a method of achieving them will be apparent with reference to the embodiments described below in detail together with the accompanying drawings. However, the present invention is not limited to the embodiments to be described below, but may be implemented in various different forms, and these embodiments are only provided to make the disclosures of the present invention complete, and to fully inform the scope of the invention to those of ordinary skill in the technical field to which the present invention belongs. And, the invention is only defined by the scope of the claims. The same reference numerals refer to the same components throughout the specification.

Unless otherwise defined, all terms (including technical and scientific terms) used in the present specification may be used as meanings that can be commonly understood by those of ordinary skill in the art to which the present invention belongs. In addition, terms defined in a commonly used dictionary are not interpreted ideally or excessively unless explicitly defined specifically.

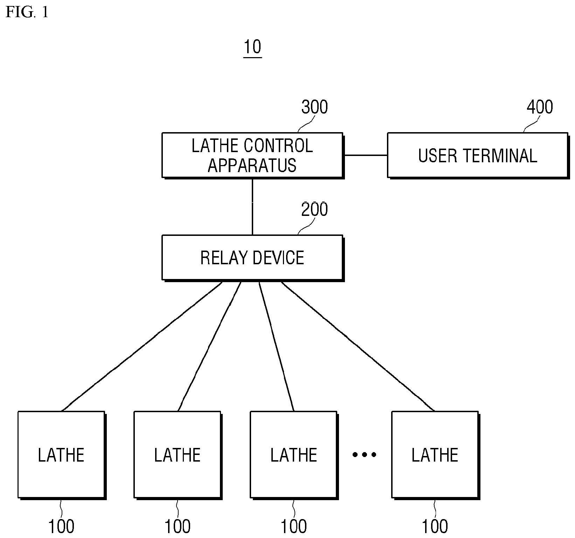

FIG. 1 is a drawing illustrating a lathe control system.

Referring to FIG. 1, a lathe control system 10 is configured to include lathes 100, a relay device 200, an apparatus for controlling a lathe (hereinafter, the lathe control apparatus) 300, and a user terminal 400.

The lathes 100 may process raw materials to produce workpieces. In the present invention, the lathes 100 may be automatic lathes. Each of the lathes 100 may be equipped with multiple tools and may perform various machining processes on a single raw material using the multiple tools.

The lathe control system 10 may include a plurality of lathes 100. Each of the lathes 100 may produce the same workpieces using the same raw materials or different workpieces using different raw materials.

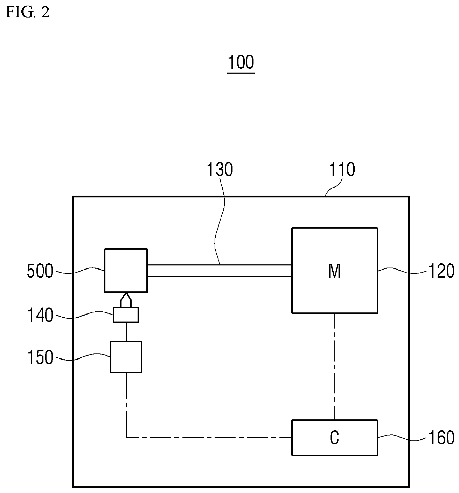

The lathes 100 may process the fed raw materials to produce multiple workpieces. The production of workpieces may be repeatedly performed under the control of a control unit 160 (refer to FIG. 2), which is equipped in each of the lathes 100.

The relay device 200 may relay communication between the lathes 100 and the lathe control apparatus 300. For example, in response to control information destined for a particular lathe 100 being received from the lathe control apparatus 300, the relay device 200 may transmit the received control information to the particular lathe 100. Alternatively, in response to processing environment information being received from the lathes 100, the relay device 200 may transmit the received processing environment information to the lathe control apparatus 300. In the present invention, the relay device 200 may be disposed adjacent to the lathes 100. For example, the relay device 200 may provide edge computing functionalities, but is not limited to providing such edge computing functionalities.

The lathe control apparatus 300 may control the lathes 100. Specifically, the lathe control apparatus 300 may transmit machining programs and information to the lathes 100. The lathes 100 may produce workpieces by operating machining programs received from the lathe control apparatus 300. At this time, the lathes 100 may produce workpieces by reflecting machining information received along with the machining programs in the corresponding machining programs. The choice of control for the processing of workpieces by the lathes 100 may be set either by the lathes 100 or the lathe control apparatus 300, depending on the circumstances.

The lathe control apparatus 300 may store machining programs and information for the production of different workpieces. In particular, the lathe control apparatus 300 may manage machining programs and information for different workpieces as a database. Thus, when a production command for a particular workpiece is received from users, the lathe control apparatus 300 may search for and find a machining program and information for the production of the particular workpiece and transmit the found machining program and information the lathes 100.

The lathe control apparatus 300 may be disposed adjacent to or remotely from the lathes 100. For example, the lathe control apparatus 300 may be a cloud server or may be provided in the form of an individual server operated by a company running the lathes 100. The lathe control apparatus 300 may also be in the form of a server that receives and manages data from the lathes 100 operated by multiple companies. The lathe control apparatus 300 may communicate with the relay device 200 through a network. The lathe control apparatus 300 and the relay device 200 may be connected in a wireless or wired manner, and the relay device 200 may be omitted if the lathe control apparatus 300 and the lathes 100 directly transmit and receive data. The network may be a local network or a remote network.

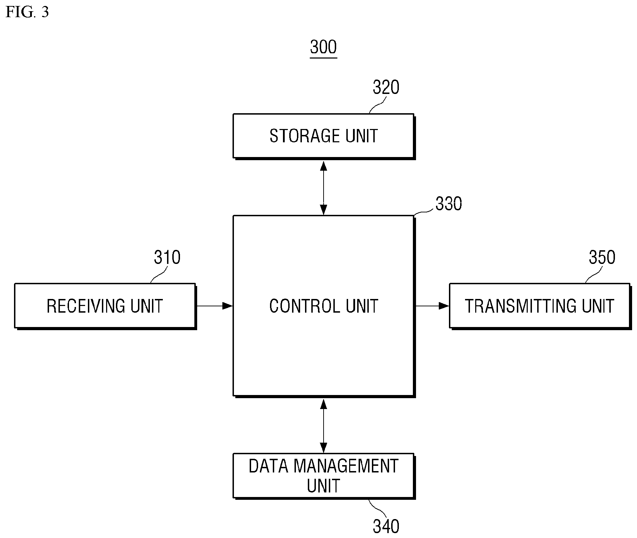

The structure and functions of the lathe control apparatus 300 will hereinafter be described in detail with reference to FIG. 3.

The user terminal 400 may communicate with the lathe control apparatus 300 to transmit and receive user input information and user convenience information. The user terminal 400 may perform communication with the lathe control apparatus 300 through a network. The network may be a local network or a remote network.

The user terminal 400 may be a stationary device such as a personal computer (PC) or a portable device such as a laptop or smartphone. The users may access the lathe control apparatus 300 from their location through the network to perform tasks for controlling the lathes 100.

The user terminal 400 may receive user input information from the users and may transmit the user input information to the lathe control apparatus 300. The user input information may include machining programs and information. The users may use the user terminal 400 to enter machining programs and input machining information for use in the corresponding matching programs.

Furthermore, the user terminal 400 may also output user convenience information received from the lathe control apparatus 300. The user convenience information may be the results of a search for machining programs and information. As previously mentioned, the lathe control apparatus 300 may store multiple machining programs and information for producing different workpieces. If a search request is received from the user terminal 400, the lathe control apparatus 300 may search for the corresponding machining programs and information and transmit them to the user terminal 400. The users may check the search results corresponding to their search requests through the user terminal 400.

The search results may include multiple machining programs and information. The users may select machining programs and information of their choice from among the multiple machining programs and information included in the search results. Consequently, the lathe control apparatus 300 may transmit the machining programs and information selected by the users to the lathes 100. The lathes 100 may produce workpieces using the received machining program and information.

As the machining programs and information for different workpieces are databased and stored in the lathe control apparatus 300, the management of a machining program and information for each workpiece can be systematically performed. Especially, when each user wishes to produce the same workpiece previously produced by other users, they can easily acquire the corresponding machining program and information from the lathe control apparatus 300, eliminating the need to create a new machining program and information.

FIG. 2 is a drawing illustrating a lathe.

Referring to FIG. 2, a lathe 100 may include a chamber 110, a motor 120, a spindle 130, tools 140, a driving unit 150, and a control unit 160.

The chamber 110 may house the motor 120, the tools 140, the driving unit 150, and the control unit 160. Alternatively, in some embodiments of the present invention, at least one of the motor 120, the tools 140, the driving unit 150, and the control unit 160 may be provided outside the chamber 110.

The motor 120 may rotate the spindle 130. Raw materials may be provided at the end of the spindle 130. The raw materials may be rotated by the force of the motor 120.

The tools 140 may process the raw materials. For example, the tools 140 may perform a grinding or cutting operation on the raw materials. The lathe 100 may be equipped with multiple tools 140, and the tools 140 may perform individual tasks.

The driving unit 150 may move the tools 140 or adjust the posture of the tools 140. The tools 140 may be moved by the driving unit 150 in the direction of the raw materials or in the opposite direction, or the posture of the tools 140 relative to the raw materials may be adjusted.

The control unit 160 may control the motor 120 and the driving unit 150. For example, the control unit 160 may control the rotation and rotational speed of the motor 120. Additionally, the control unit 160 may control the driving unit 150 to adjust the position and posture of the tools 140. Particularly, the control unit 160 may control the driving unit 150 according to a machining program and information received from the lathe control apparatus 300 to adjust the position and posture of the tools 140.

The machining program received from the lathe control apparatus 300 may include control commands for the motor 120 and the driving unit 150 to produce a workpiece. As the motor 120 and the driving unit 150 are controlled by the received machining program, a workpiece corresponding to the received machining program may be produced.

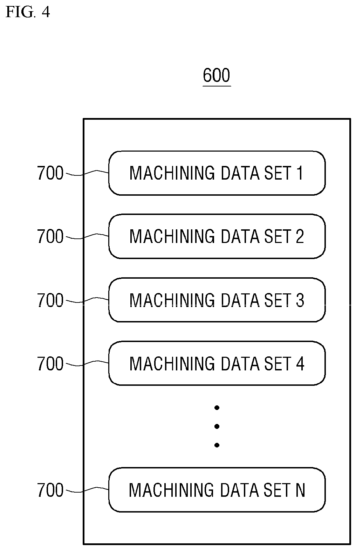

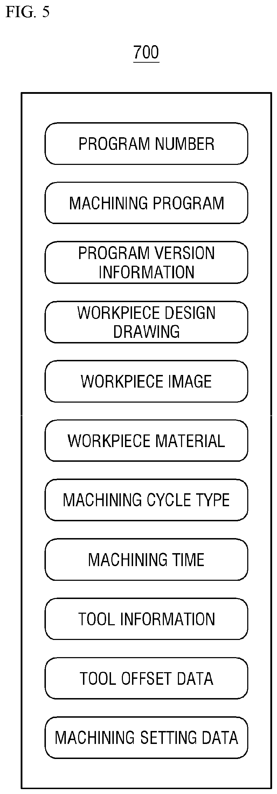

FIG. 3 is a block diagram of a lathe control device according to an embodiment of the present invention, FIG. 4 is a drawing illustrating a database, and FIG. 5 is a drawing illustrating a machining data set.

Referring to FIG. 3, the lathe control apparatus 300 may include a receiving unit 310, a storage unit 320, a control unit 330, a data management unit 340, and a transmitting unit 350.

The receiving unit 310 may receive machining programs and information for use in the production of workpieces by the lathes 100. Machining programs and information may be received from the user terminal 400. Alternatively, at least some machining programs and information may be received from the lathes 100. The lathes 100 may perform machining operations using machining programs and information. Therefore, the receiving unit 310 may also receive machining programs and information from the lathes 100. For example, each user may select a particular machining program and information from among those stored in the lathes 100, and the selected machining program and information may be received through the receiving unit 310.

The receiving unit 310 may receive machining programs and information through a network. Each user may transmit machining programs and information or select some of the machining programs and information stored in the lathes 100 using the user terminal 400, even from a location not adjacent to the lathe control apparatus 300. Additionally, the receiving unit 310 may receive search requests. The search requests may be received from the user terminal 400 searching for a machining data set.

The storage unit 320 may store machining programs and information received through the receiving unit 310. The machining programs and information may be databased and stored. In particular, the machining programs and information may be stored in the form of machining data sets that will be described later. The storage unit 320 may store machining data sets for a variety of workpieces, accommodating multiple machining data sets for different workpieces.

Referring to FIG. 4, the storage unit 320 may store a database 600, which includes at least one machining data set 700.

Similar machining data sets 700 may be stored physically or logically adjacent to one another. Furthermore, the storage unit 320 may also store index information for facilitating the search for the machining data sets 700, together with the machining data sets 700. The index information may include brief information on each machining data set 700.

Referring again to FIG. 3, the data management unit 340 may associate a machining program and information for each workpiece to create each machining data set 700. The data management unit 340 combines a machining program necessary for the production of a particular workpiece and machining information for use in the corresponding machining program to create a single machining data set 700 for the particular workpiece.

Machining programs and information used in creating the machining data sets 700 may be those received through the receiving unit 310. The data management unit 340 may produce the machining data sets 700 using the machining programs and information received from the user terminal 400.

Referring to FIG. 5, a machining data set 700 may include program information and machining information.

The program information may include at least one of a machining program, a program number, and program version information.

The machining program refers to that created by the user and received through the user terminal 400. The program number refers to a unique number assigned to the machining program. The program version information shows the modification history of the machining program. Users who access the lathe control apparatus 300 may modify the machining program. The users may be the same individual or different individuals. Whenever the machining program is modified by the users, modifications made to the machining program may be recorded in the program version information along with the version of the machining program. By referencing the program version information, the users may check what modifications have been made to the machining program for each version of the machining program.

The machining information may include at least one of the following: a design drawing of a workpiece, an image of the workpiece, material information of the workpiece, the type of a machining cycle for the workpiece, machining time required for the production of the workpiece, machining temperature information during the production of the workpiece, information on tools used for the production of the workpiece, offset data for the tools, and machining setting data for the tools. The design drawing of the workpiece may be, for example, a Computer-Aided Design (CAD) drawing. The design drawing of the workpiece may be a two-dimensional (2D) or three-dimensional (3D) drawing. The image of the workpiece may be a photograph of a finished workpiece obtained by machining raw materials. For example, the image of the workpiece may be an image of the workpiece captured by a camera. The machining temperature information may include the temperatures of the workpiece, tools, and workshop during production. The information on the tools may include the types of the tools used in production and the lifespan of each of the tools. The offset data for the tools may include data for determining the position and posture of the tools before production. The control unit 160 of each lathe 100 may control the corresponding driving unit 150 to apply offset data to a reference position and posture orientation. The machining setting data may include data for determining the position and posture of the tools during production. The machining program may control the driving unit 150 according to the machining setting data to produce a workpiece of a particular shape.

Machining data sets 700 created by the data management unit 340 may be stored in the storage unit 320. The storage unit 320 may store multiple machining data sets 700 for different workpieces.

Referring again to FIG. 3, the control unit 330 searches for and extracts a machining data set corresponding to a received search request from among multiple machining data sets. Each user may transmit a search request to find an appropriate machining data set for the production of a particular workpiece. The search request may be received through the receiving unit 310.

In response to a search request being received from each user, the control unit 330 may search for a machining data set corresponding to the search request from among the machining data sets stored in the storage unit 320. The control unit 330 may then generate a search result including the found machining data set.

A search request may include a keyword related to the production of a particular workpiece. Specifically, a search request may include terms representing at least one of the contents included in program information and machining information. For example, each user may create a search request including at least one of a program number, workpiece material information, machining cycle type information, and machining setting data.

The control unit 330 may search for a machining data set corresponding to a search conducted by the user terminal 400 from among the multiple machining data sets stored in the storage unit 320. For example, the control unit 330 may extract a machining data set that includes content identical or similar to a keyword included in a received search request from among all the machining data sets stored in the storage unit 320.

Alternatively, the control unit 330 may search for a machining data set using an artificial intelligence algorithm. The data management unit 340 may learn the correlations between a keyword and machining data sets found in response to the corresponding keyword, thereby updating the artificial intelligence algorithm. Each user may select one of the machining data sets found by the control unit 330. The data management unit 340 may update the artificial intelligence algorithm by learning the correlation between the keyword and the machining data set selected by the user.

The control unit 330 may apply a newly received keyword to the artificial intelligence algorithm to search for a machining data set. The training of the artificial intelligence algorithm by the data management unit 340 may be performed whenever a search request is received from each user. As the training of the artificial intelligence algorithm is continued, the learning level of the artificial intelligence algorithm may rise above a previously-set threshold learning level. If the learning level of the artificial intelligence algorithm is above the threshold learning level, the control unit 330 may search for machining data sets by applying the newly received keyword to the artificial intelligence algorithm. Meanwhile, if the learning level of the artificial intelligence algorithm is below the threshold learning level, the control unit 330 may search for machining data sets corresponding to the keyword.

The transmitting unit 350 may transmit a search result that includes one or more machining data sets found by the control unit 330. The search result may include multiple machining data sets. Each user may select their desired machining data set from among the machining data sets included in the search result.

The transmitting unit 350 may transmit a search result through a network. Each user may access the lathe control apparatus 300 and receive the search result, even from a remote location.

The control unit 330 may not only search for data sets, but also perform overall control of the receiving unit 310, the storage unit 320, the data management unit 340, and the transmitting unit 350. The control unit 330 may also determine the learning level for data searches. That is, the control unit 330 may determine whether the data search learning level is above the threshold learning level. For example, the control unit 330 may determine the data search learning level by referencing the number of learning occurrences. Alternatively, in response to a search request being received, the control unit 330 may extract machining data sets that are predicted to be selected by each user, and may determine the data search learning level based on the difference between the predicted machining data sets and a machining data set actually selected by each user.

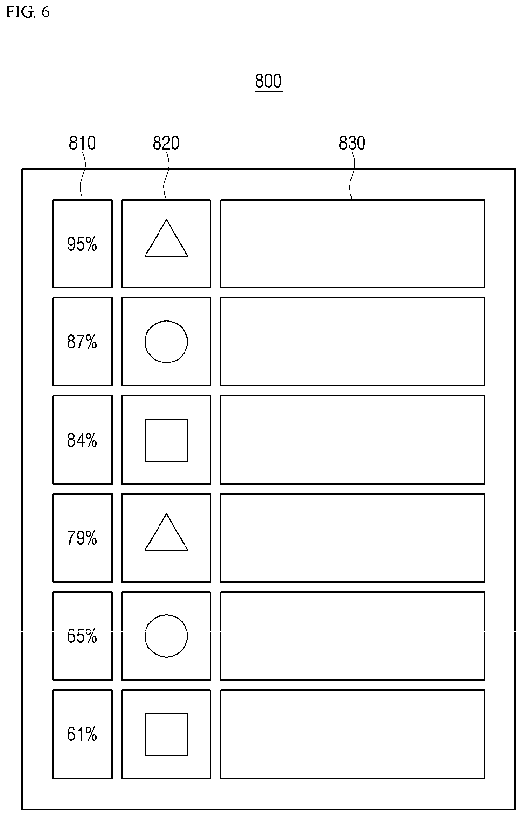

FIG. 6 is a drawing illustrating a search results screen.

Referring to FIG. 6, a search results screen 800 may include similarity areas (810), image areas 820, and description areas 830.

The search results screen 800 may be created by the control unit 330 of the lathe control apparatus 300. The control unit 330 may generate the search results screen 800 to facilitate easy review of search results by each user. The search results screen 800 may be output through the user terminal 400.

The search results screen 800 may include information on at least one machining data set. Each user may select one of the machining data sets included in the search results screen 800.

In the similarity areas 810, the similarities between the search request and the found machining data sets may be displayed. As the found machining data sets more closely match the search request, higher similarity levels may be displayed.

In the image areas 820, images of workpieces may be displayed. These images may be design drawings or photographs of the workpieces. Each user may refer to the images displayed in the image areas 820 to select their desired machining data set from among multiple machining data sets.

In the description areas 830, brief information on the corresponding machining data sets may be displayed. For example, parts of the content included in program information and machining information may be displayed in the description areas 830. Each user may refer to the content displayed in the description areas 830 to select their desired machining data set from among multiple machining data sets.

As information on at least one machining data set is included in a single search results screen 800, each user can easily select their desired machining data set. Particularly, as machining data sets are included in the search results screen 800 in order of their similarity levels, each user can more quickly select the machining data set for the workpiece they wish to produce.

Furthermore, although not illustrated, each user can use the search results screen 800 to call up the machining program included in the corresponding machining data set, and can also check and modify the machining program.

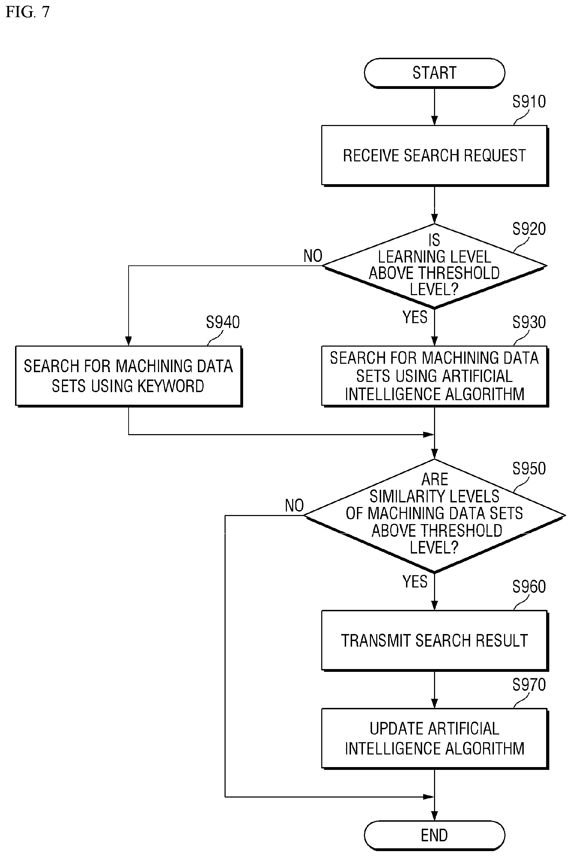

FIG. 7 is a flowchart illustrating a method of controlling a lathe according to an embodiment of the present invention.

Referring to FIG. 7, the lathe control apparatus 300 may search for machining data sets and transmit them to each user.

Firstly, the receiving unit 310 of the lathe control apparatus 300 may receive a search request from the user terminal 400 (S910). The search request may include a keyword.

Upon receiving the search request, the control unit 330 may determine whether the learning level for data searches is above the threshold learning level (S920). If the data search learning level is above the threshold learning level, the control unit 330 may search for machining data sets using the artificial intelligence algorithm (S930). On the other hand, if the data search learning level is below the threshold learning level, the control unit 330 may search for machining data sets by referring to the keyword included in the search request (S940).

The control unit 330 may determine the similarities between the search request and the found machining data sets. The control unit 330 may also determine whether the similarity levels of the found machining data sets are above a threshold similarity level (S950). Thus, the control unit 330 may generate a search result that includes machining data sets with a similarity score above the threshold similarity level. The search result may include at least one machining data set.

The transmitting unit 350 may transmit the search result generated by the control unit 330 (S960). Each user may select one of the machining data sets included in the search result. If one of the machining data sets included in the search result is selected, the lathe control apparatus 300 may transmit the selected machining data set to a corresponding lathe 100. The lathe 100 may create a workpiece by processing raw materials according to machining program and information included in the received machining data set.

After the transmission of the search result, the data management unit 340 may learn the correlations between the keyword in the search request and the machining data sets found by the control unit 330 to update the artificial intelligence algorithm (S970). The update of the artificial intelligence algorithm may be performed whenever a search request is received from each user. Then, when a new search request is received later from the user terminal 400, the control unit 330 may search for machining data sets using the updated artificial intelligence algorithm.

Although the embodiments of the present invention have been described with reference to the above and the accompanying drawings, those of ordinary skill in the art, to which the present invention pertains, can understand that the present invention may be implemented in other specific forms without changing the technical spirit or essential features. Therefore, it should be understood that the embodiments described above are illustrative and non-limiting in all respects.

## Claims

1. An apparatus for controlling a lathe, comprising:
a receiving unit receiving machining programs and information for use in lathes for the production of workpieces;
a storage unit storing the machining programs and information;
a data management unit generating machining data sets for the workpieces by associating the machining programs and information;
a control unit searching for, finding, and extracting machining data sets that correspond to a received search request from among a plurality of machining data sets; and
a transmitting unit transmitting a search result that includes the found machining data sets.

2. The apparatus of claim 1, wherein
the machining data sets include program information, and
the program information includes at least one of the following: machining programs for use in the production of the workpieces, program numbers of the machining programs, and program version information, which shows modification histories of the machining programs.

3. The apparatus of claim 1, wherein the machining information includes at least one of the following: design drawings of the workpieces, images of the workpieces, material information of the workpieces, the types of machining cycles for the workpieces, machining time required for the production of the workpieces, machining temperature information during the production of the workpieces, information on tools used for the production of the workpieces, offset data for the tools, and machining setting data for the tools.

4. The apparatus of claim 1, wherein the receiving unit receives the machining programs and the machining information through a network.

5. The apparatus of claim 1, wherein the transmitting unit transmits the search result through a network.

6. The apparatus of claim 1, wherein the search request is received from a user terminal searching for machining data sets.

7. The apparatus of claim 6, wherein the control unit searches for machining data sets that correspond to a search conducted by the user terminal from among the plurality of machining data sets.

8. The apparatus of claim 6, wherein
the data management unit updates an artificial intelligence algorithm by learning correlations between a keyword and machining data sets found in response to the keyword, and
the control unit searches for machining data sets by applying a newly-received keyword to the artificial intelligence algorithm.

9. The apparatus of claim 8, wherein if a learning level of the artificial intelligence algorithm is above a previously-set threshold learning level, the control unit searches for machining data sets by applying the newly-received keyword to the artificial intelligence algorithm.

10. The apparatus of claim 1, wherein the search result includes similarities between the search request and the found machining data sets.

11. A method of controlling a lathe, comprising:
receiving machining programs and information for use in lathes for the production of workpieces;
storing the machining programs and information;
generating machining data sets for the workpieces by associating the machining programs and information;
searching for and finding machining data sets that correspond to a received search request from among a plurality of machining data sets; and
transmitting a search result that includes the found machining data sets.

12. The method of claim 11, wherein
the machining data sets include program information, and
the program information includes at least one of the following: machining programs for use in the production of the workpieces, program numbers of the machining programs, and program version information, which shows modification histories of the machining programs.

13. The method of claim 11, wherein the machining information includes at least one of the following: design drawings of the workpieces, images of the workpieces, material information of the workpieces, the types of machining cycles for the workpieces, machining time required for the production of the workpieces, machining temperature information during the production of the workpieces, information on tools used for the production of the workpieces, offset data for the tools, and machining setting data for the tools.

14. The method of claim 11, wherein the receiving the machining programs and the machining information, comprises receiving the machining programs and the machining information through a network.

15. The method of claim 11, wherein the transmitting the search result, comprises transmitting the search result through a network.

16. The method of claim 11, wherein the search request is received from a user terminal searching for machining data sets.

17. The method of claim 16, wherein the searching for and finding machining data sets, comprises searching for and finding machining data sets that correspond to a search conducted by the user terminal from among the plurality of machining data sets.

18. The method of claim 16, further comprising:
updating an artificial intelligence algorithm by learning correlations between a keyword and machining data sets found in response to the keyword; and
searching for machining data sets by applying a newly-received keyword to the artificial intelligence algorithm.

19. The method of claim 18,
wherein the searching for machining data sets by applying the newly-received keyword to the artificial intelligence algorithm, comprises searching for machining data sets by applying the newly-received keyword to the artificial intelligence algorithm, if a learning level of the artificial intelligence algorithm is above a previously-set threshold learning level.

20. The method of claim 11, wherein the search result includes similarities between the search request and the found machining data sets.
